# EUROPÄISCHE PATENTSCHRIFT

(11) **EP 1 583 958 B1**
(45) Veröffentlichungstag und Bekanntmachung des Hinweises auf die Patenterteilung: **15.04.2009**
(21) Anmeldenummer: 03770879.9
(22) Anmeldetag: 24.09.2003
(51) Int. Cl.: G01N 27/417

(54) **SCHALTUNGSANORDNUNG ZUM BETREIBEN EINES GASSENSORS**
CIRCUIT ARRANGEMENT FOR OPERATING A GAS SENSOR
CIRCUITERIE POUR FAIRE FONCTIONNER UN CAPTEUR DE GAZ

(30) Priorität: 07.12.2002 DE 10257284
(43) Veröffentlichungstag der Anmeldung: 12.10.2005
(73) Patentinhaber: ROBERT BOSCH GMBH, 70442 Stuttgart (DE)
(72) Erfinder: SCHNAIBEL, Eberhard, 71282 Hemmingen (DE); JUNGINGER, Erich, 70191 Stuttgart (DE); KORING, Andreas, 71636 Ludwigsburg (DE); DEIBERT, Ruediger, 73730 Esslingen a. N. (DE); BRAUN, Harry, 71296 Heimsheim (DE); DIEHL, Lothar, 70839 Gerlingen (DE)
(86) Internationale Anmeldenummer: PCT/DE2003/003168
(87) Internationale Veröffentlichungsnummer: WO 2004/053475

(56) Entgegenhaltungen:
- DE-A- 4 333 231
- DE-A- 19 636 226
- US-A- 5 804 700
- US-A- 6 059 947
- US-B1- 6 471 840

## Beschreibung

### Stand der Technik

Die Erfindung geht aus von einer Schaltungsanordnung zum Betreiben eines Gassensors nach der Gattung des unabhängigen Anspruchs.

In dem Fachbuch "Ottomotor-Management/Bosch", Verlag Vieweg, 1. Auflage 1998, Seiten 22-23 ist eine Schaltungsanordnung beschrieben, die ein mittels eines Gassensors gewonnenes Signal bereitstellt, das ein Maß für die Luftzahl Lambda im Abgas von Verbrennungsprozessen ist. Der Gassensor enthält eine zwischen einer ersten und einer zweiten Elektrode angeordnete Pumpzelle. Die erste Elektrode ist dem Abgas ausgesetzt. Die zweite Elektrode ist in einem Messgasraum angeordnet, der über eine Diffusionbarriere mit dem Abgas beaufschlagt wird. Die zweite Elektrode bildet mit einer in einem Referenzgasraum angeordneten dritten Elektrode eine Nernstzelle, die eine nahezu sprungförmige Spannungsänderung im Bereich eines an der zweiten Elektrode der Nernstzelle vorliegenden stöchiometrischen Gasgemisches bereitstellt. Der Referenzgasraum ist mit Sauerstoff als Referenzgas gefüllt. Die erforderliche Sauerstoffkonzentration im Referenzgasraum kann mit einem Referenzpumpstrom eingestellt werden, welcher der im Referenzgasraum angeordneten dritten Elektrode zugeführt wird. Der Referenzpumpstrom führt zu einem Sauerstoffionentransport aus dem Messgasraum der Nernstzelle in den Referenzgasraum.

Ein Differenzverstärker vergleicht die an der Nernstzelle auftretende Spannung mit einer Referenzspannung, die auf ungefähr 450 mV, entsprechend näherungsweise der Mitte des Spannungssprungs der Nernstzelle, festgelegt ist. Der Differenzverstärker liegt einen Pumpzellenpumpstrom fest, welcher der ersten Elektrode zugeführt ist. Der Pumpzellenpumpstrom führt zu einem Sauerstoffionentransport in der Pumpzelle, die den Sauerstoffanteil im Messgasraum auf einem Pegel zu halten versucht, bei dem ein stöchiometrisches Gemisch vorliegt. Der Pumpzellenpumpstrom kann als Ausgangsignal des Gassensors herangezogen werden. Er entspricht einem Maß für die Luftzahl Lambda im Abgas.

Die Sauerstoffkonzentration im Referenzgasraum ändert sich durch Diffusionsvorgänge ständig. Einerseits können Sauerstoffionen aus dem Referenzgasraum hinaus diffundieren und andererseits können Kohlenwasserstoffe in den Referenzgasraum hinein diffundieren. Beide Vorgänge führen zu einer unerwünschten Verringerung der Sauerstoffkonzentration, die als Vergiftung des Referenzgasraums bezeichnet wird.

Aus der DE 43 33 231 A1 ist ein Verfahren zum Betreiben eines Sauerstoffsensors mit interner gepumpter Referenz bekannt geworden, bei dem der Referenzpumpstrom zur Vermeidung der Vergiftung bei bestimmten Betriebsbedingungen vorübergehend erhöht wird, um eine eventuell vorhandene Vergiftung zu beseitigen oder einer drohenden Vergiftung vorzubeugen.

Eine unerwünschte Änderung der Sauerstoffkonzentration im Referenzgasraum kann auch durch eine Verfälschung des Referenzpumpstroms durch Leckströme verursacht werden, die zwischen der Zuleitung zur dritten Elektrode und beispielsweise Zuleitungen zu einer Sensorheizung auftreten können.

Der Erfindung liegt die Aufgabe zu Grunde, eine Schaltungsanordnung anzugeben, die einen zuverlässigen Betrieb eines Gassensors mit einem Referenzgasraum ermöglicht.

### Vorteile der Erfindung

Die Aufgabe wird durch die im unabhängigen Anspruch angegebenen Merkmale gelöst.

Hiernach ist eine Diagnoseanordnung vorgesehen, die einen Zeitgeber enthält. Die Diagnoseanordnung gibt ein Stromauswahlsignal an eine Stromquelle zur Festlegung des Referenzpumpstroms im Diagnosebetrieb des Gassensors und ein Schaltsignal an den Zeitgeber zum Start des Zeitgebers ab. Die Diagnoseanordnung bewertet ein Sensorsignal des Gassensors im Diagnosebetrieb bezogen auf die Zeit.

Die erfindungsgemäße Schaltungsanordnung erhöht die Zuverlässigkeit des Sensorsignals des Gassensors. Unnötige Korrekturen oder zu späte Korrekturen entfallen. Weiterhin kann ein gegebenenfalls erforderlicher Eingriff, beispielsweise in die Festlegung des Referenzpumpstroms, auf das notwendige Maß beschränkt werden, so dass eine Überlastung der Nernstzelle vermieden wird. Die Heranziehung des Sensorsignals ermöglicht eine einfache Realisierung der erfindungsgemäßen Schaltungsanordnung.

Vorteilhafte Ausgestaltungen und Weiterbildungen der erfindungsgemäßen Schaltungsanordnung ergeben sich aus abhängigen Ansprüchen.

Eine Ausgestaltung sieht vor, dass die Diagnoseanordnung die Änderungsgeschwindigkeit des Sensorsignals bewertet. Die zeitliche Bewertung, insbesondere die der Änderungsgeschwindigkeit ermöglicht eine Bewertung einer Vergiftungsrate oder eines Leckstroms.

Eine Ausgestaltung sieht vor, dass die Diagnoseanordnung einen Komparator enthält, der das Sensorsignal mit einem Schwellenwert vergleicht und der in Abhängigkeit vom Vergleichsergebnis ein Diagnosesignal bereitstellt. Das Diagnosesignal kann vorteilhaft zum Anhalten des Zeitgebers eingesetzt werden.

Eine Weiterbildung sieht vor, dass ein vom Zeitgeber bereitgestelltes Endsignal, das eine abgelaufene Zeit widerspiegelt, den Referenzpumpstrom beeinflusst

Eine Ausgestaltung sieht vor, dass die vom Zeitgeber erfassbare Zeit auf eine Maximalzeit festgelegt ist. Mit dieser Maßnahme wird sind insbesondere eine geringe Vergiftung oder Vergiftungsrate sowie geringe Leckströme bewertbar, bei denen eine Schwellenüberschreitung durch das Sensorsignal innerhalb der Maximalzeit nicht auftreten würde. Sofern innerhalb der Maximalzeit eine Schwellenüberschreitung auftritt, ist eine quantitative Bewertung möglich.

Ein aussagekräftiges Diagnosesignal wird dadurch erhalten, dass die Elektrode des Referenzgasraums mit einem negativen Pumpstrom betrieben wird. Ein negativer Pumpstrom soll bedeuten, dass das Referenzgas abgepumpt wird. Mit dieser Maßnahme können bereits beginnende Vergiftungen oder geringe Leckströme erkannt werden. Insbesondere tritt mit hoher Wahrscheinlichkeit innerhalb der Maximalzeit eine Schwellenüberschreitung auf, so dass eine quantitative Bewertung der Vergiftung, der Vergiftungsrate oder der Leckströme möglich ist.

Eine einfache Möglichkeit der Steuerung der Stromquelle mit dem Stromauswahlsignal sieht eine Abschaltung der Stromquelle vor. Vorteilhaft wird ein negativer Referenzpumpstrom vorgegeben, der zu einer gezielten Reduzierung der Konzentration des Referenzgases führt. Alternativ und/oder ergänzend kann die Referenzelektrode über einen Widerstand an ein vorgegebenes Potenzial geschaltet werden. Das Potenzial ist derart fest zu legen, dass ein über den Widerstand fließender Ableitstrom das Referenzgas ständig abpumpt, um ebenfalls die Konzentration des Referenzgases gezielt zu reduzieren.

Das Diagnoseergebnis der erfindungsgemäßen Schaltungsanordnung wird zweckmäßigerweise verwendet zur Festlegung des Referenzpumpstroms außerhalb des Diagnosebetriebs, so dass einer Vergiftung entgegengewirkt wird oder ein Leckstrom kompensiert wird.

Eine Ausgestaltung sieht vor, dass der Gassensor ein Lambdasensor zur Ermittlung eines Luft/Brennstoff-Verhältnisses bei Verbrennungsprozessen ist. Der Referenzgasraum enthält dann als Referenzgas Sauerstoff.

Der Lambdasensor ist beispielsweise im Abgassystem einer Brennkraftmaschine oder einer Heizungsanlage angeordnet. Eine auf die Anordnung im Abgassystem einer Brennkraftmaschine bezogene Weiterbildung sieht vor, dass die Diagnosesteueranordnung die Diagnose nach dem Abstellen der Brennkraftmaschine startet.

Vorteilhafte Ausgestaltungen und Weiterbildungen vergeben sich aus weiteren abhängigen Ansprüchen und aus der folgenden Beschreibung.

### Zeichnung

Es zeigen
- Figur 1: ein Schnittbild durch einen Gassensor und
- Figur 2: ein Blockschaltbild einer erfindungsgemäßen Schaltungsanordnung.

### Beschreibung des Ausführungsbeispiels

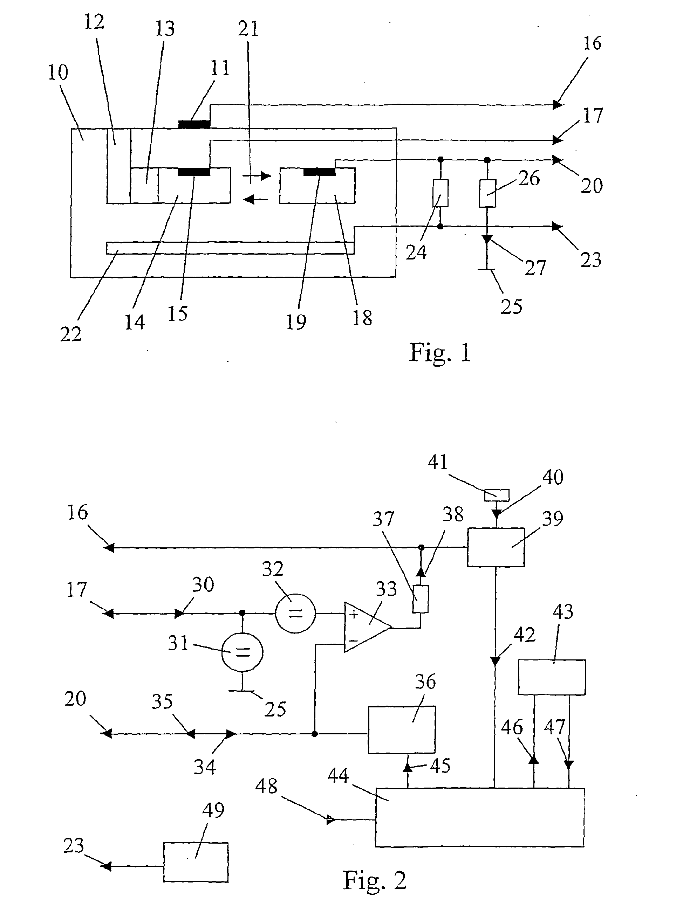

Der in Figur 1 gezeigte Gassensor 10 enthält eine erste Elektrode 11, die einem zu untersuchenden Gas ausgesetzt ist. Das zu untersuchende Gas gelangt über einen Gaskanal 12 und eine Diffusionsbarriere 13 in einen Messgasraum 14, in dem eine zweite Elektrode 15 angeordnet ist. Zwischen der ersten und zweiten Elektrode 11, 15 entsteht eine Pumpzelle, Die erste Elektrode ist mit einer Pumpstromleitung 16 und die zweite Elektrode mit einer Messleitung 17 verbunden.

Der Gassensor 10 enthält einen Referenzgasraum 18, in dem eine dritte Elektrode 19 angeordnet ist, die mit einer Referenzpumpstromleitung 20 verbunden ist. Zwischen dem Referenzgasraum 18 und dem Messgasraum 14 entsteht eine Nernstzelle in der ein Referenzgasionentransport 21 stattfinden kann.

Der Gassensor 10 enthält weiterhin eine Sensorheizung 22, die mit einer Heizleitung 23 verbunden ist. Zwischen der Heizleitung 23 und der Referenzpumpstromleitung 20 liegt ein parasitärer Widerstand 24. Zwischen der Referenzpumpstromleitung 20 und einem Potenzial 25 ist ein ohmscher Widerstand 26 geschaltet durch den ein Ableitstrom 27 fließt.

Das in Figur 2 gezeigte Blockschaltbild einer erfindungsgemäßen Schaltungsanordnung zeigt die Pumpstromleitung 16, die Messleitung 17, die Referenzpumpstromleitung 20 sowie die Heizleitung 23, die mit den in Figur 1 gleich bezeichneten Leitungen identisch sind.

Die ein erstes Messsignal 30 führende Messleitung 17 ist mit einer Offsetspannungsquelle 31 und mit einer Referenzspannungsquelle 32 verbunden. Die Referenzspannungsquelle 32 ist mit einem nichtinvertierenden Eingang eines Differenzverstärkers 33 verbunden.

Die ein zweites Messsignal 34 führende Referenzpumpstromleitung 20 leitet gleichzeitig einen Referenzpumpstrom 35, den eine Stromquelle 36 bereitstellt. Die Referenzpumpstromleitung 20 ist mit einem invertierenden Eingang des Differenzverstärkers 33 verbunden, dessen Ausgang über einen Arbeitswiderstand 37 einen Pumpstrom bereitstellt. Der Pumpstrom ist identisch mit einem Sensorsignal 38, das einem Komparator 39 zugeführt ist, der das Sensorsignal 38 mit einem Schwellenwert 40 vergleicht, das ein Schwellenwertgeber 41 bereitstellt.

Der Komparator 39 gibt ein Diagnosesignal 42 an die Stromquelle 36 und an eine Diagnosesteueranordnung 44 ab.

Die Diagnosesteueranordnung 44 gibt ein erstes Stromauswahlsignal 45 an die Stromquelle 36 und ein Schaltsignal 46 an den Zeitgeber 43 ab, der ein Endsignal 47 an die Diagnosesteueranordnung 44 zurückgibt. Die Diagnosesteueranordnung 44 erhält ein Freigabesignal 48 zugeführt.

Der Komparator 39, der Zeitgeber 43 und die Diagnosesteueranordnung 44 bilden zusammen eine Diagnoseanordnung.

Die Heizleitung 23 ist mit einer Heizungssteuerung 49 verbunden.

Die erfindungsgemäße Schaltungsanordnung arbeitet folgendermaßen:

Die erste. Elektrode 11 des Gassensors 10 ist einem zu untersuchenden Gas ausgesetzt. Bei dem Gas kann es sich um ein Abgas eines Verbrennungsprozesses handeln, wie er beispielsweise bei einer mit fossilen Brennstoffen betriebenen Heizungsanlage oder bei Brennkraftmaschinen gegeben ist. Im Folgenden wird beispielhaft von einem Abgas einer Brennkraftmaschine ausgegangen. Das Abgas gelangt über den Gaskanal 12 und durch die Diffusionsbarriere 13 in den Messraum 14, der zusammen mit dem Referenzgasraum 18 eine Nernstzelle bildet, die im Bereich einer Verbrennung mit stöchiometrischem Luft/Brennstoff Verhältnis, entsprechend einem Lambda von Eins, eine sprungförmige Spannungsänderung aufweist. Der Referenzgasraum 18 muss mit einem Referenzgas gefüllt sein, das bei einem Abgas eines Verbrennungsprozesses Sauerstoff ist.

Die Konzentration des Sauerstoffs als Referenzgas kann bei der Nernstzelle in einem weiten Bereich liegen, da die Änderung des Restsauerstoffgehalts beim Durchschreiten des Bereichs einer stöchiometrischen Verbrennung viele Zehnerpotenzen umfasst. Dennoch ist ein wenigstens näherungsweises Konstanthalten der Konzentration des Referenzgases zur Sicherstellung eines korrekten Messergebnisses anzustreben und daher ein Absinken der Konzentration zu vermeiden.

Eine an der Nernstzelle auftretende Spannung wird über die Messleitung 17 und die Referenzpumpstromleitung 20 zum Differenzverstärker 33 geführt. Das auf der Messleitung 17 auftretende erste. Messsignal 30 wird von der Referenzspannungsquelle 32 um einen Betrag von etwa 450 mV angehoben. Mit der Wahl dieses Betrags wird erreicht, dass der Differenzverstärker 33 beim Durchschreiten der Spannung des ersten Messsignals 30 gegenüber der Spannung des zweiten Messsignals 34 einen Nulldurchgang, verbunden mit einem Vorzeichenwechsel aufweist, der zum Regeln der Spannung an der Nernstzelle auf den Wert von etwa 450 mV, entsprechend einem Lambda von etwa Eins verwendet werden kann.

Die Regelung erfolgt durch eine Beeinflussung der Konzentration des Sauerstoffs in der Messzelle 14 mittels der zwischen der ersten und zweiten Elektrode 11, 15 entstehenden Pumpzelle.

Das Ausgangssignal des Differenzverstärkers 33 erzeugt über den Arbeitswiderstand 37 einen Pumpstrom, welcher der ersten Elektrode 11 zugeleitet wird. Eine Potenzialdifferenz zwischen der ersten und zweiten Elektrode 11, 15 führt zu einem Sauerstoffionenstrom in der Pumpzelle, der mit dem Pumpstrom festgelegt ist. Mit Hilfe der Diffusionsbarriere 13 gelingt es, ein Gleichgewicht in der Messzelle 14 herzustellen, so dass die Nernstspannung zwischen der zweiten Elektrode 15 des Messgasraums 14 und der dritten Elektrode 19 des Referenzgasraums 18 konstant auf dem von der Referenzspannungsquelle 32 vorgegebenen Wert von beispielsweise etwa 450 mV gehalten werden kann, vorausgesetzt, dass die Sauerstoffkonzentration im Referenzgasraum 18 wenigstens näherungsweise auf einem vorgegebenen Wert gehalten wird.

Hierzu ist die Stromquelle 36 vorgesehen, die der dritten Elektrode 19 im Referenzgasraum 18 einen Referenzpumpstrom 35 zuführt. Der Referenzpumpstrom 35 sorgt für die Aufrechterhaltung der Sauerstoffkonzentration durch einen Sauerstoffionentransport 21 zwischen dem Messgasraum 14 und dem Referenzgasraum 18.

Diffusionsvorgänge können zu einer Vergiftung des Referenzgasraums 18 führen. In den Referenzgasraum 18 hinein diffundierte Kohlenwasserstoffe binden den Sauerstoff durch Oaidationsvorgänge. Aus dem Referenzgasraum 18 heraus diffundierter Sauerstoff senkt die Sauerstoffkonzentration unmittelbar.

Weiterhin kann eine Verfälschung des Referenzpumpstroms 35 durch Leckströme auftreten. Solche Leckströme treten durch parasitäre Widerstände 24 auf, die zwischen der Referenzpumpstromleitung 20 und Bauteilen wirksam sind, die ein niedrigeres Potenzial aufweisen wie das Potenzial auf der Referenzpumpstromleitung 20. In Figur 1 ist exemplarisch die Heizleitung 23 als Bauteil mit niedrigerem Potential eingetragen, so dass der parasitäre Widerstand 24 hier wirksam ist. Die Leckströme sind von Verunreinigungen der eingesetzten Materialen und insbesondere von der Temperatur abhängig, so dass eine Einbeziehung bei der Bemessung des Referenzpumpstroms 35 nicht ohne weiteres möglich ist. Die nicht bemerkte Reduzierung des Referenzpumpstroms 35 führt zu einer unbemerkten Reduzierung des Sauerstoffs im Referenzgasraum 18 durch ein Abpumpen des Sauerstoffs.

Das Auftreten von Diffusionsvorgängen und insbesondere von Leckströmen wird dadurch begünstigt, dass das mittlere Potenzial auf den Elektroden 11, 15, 18 durch die eingesetzte Offsetspannungsquelle 31 auf einem höherem Potenzial gehalten wird als es einem Massepotenzial entspricht. Die Offsetspannungsquelle 31 ist beispielsweise auf die Hälfte einer Betriebsspannung des Differenzverstärkers 33 eingestellt. Bei einer Betriebsspannung von 5 V ist die Spannung der Offsetspannungsquelle 31 auf 2,5 V eingestellt. Mit dieser Maßnahme werden die Potenziale des ersten und zweiten Messsignals 30, 34 auf einfach handhabbare Werte angehoben, die sich zumindest deutlich von einem Massepotenzial unterscheiden. Die Spannungsverschiebung erhöht zusätzlich eventuell vorhandene Leckströme aufgrund einer Erhöhung der Spannungsdifferenzen zwischen Bauteilen auf entsprechend höhere Werte.

Eine Diagnose der Konzentration oder der Konzentrationsänderung des Referenzgases im Referenzgasraum 18 oder der Leckströme ermöglicht die Diagnoseanordnung (39, 43, 44).

Ein Diagnosevorgang läuft folgendermaßen ab:

Beim Vorliegen eines Freigabesignals 44 startet die Diagnosesteueranordnung 44 die Diagnose durch Ausgabe des Stromauswahlsignals 45 an die Stromquelle 36 und Ausgabe des Schaltsignals 46 an den Zeitgeber 43 zum Starten der Zeiterfassung durch den Zeitgeber 43.

Das Freigabesignal 48 kann bei einem in einem nicht näher gezeigten Abgassystem einer ebenfalls nicht näher gezeigten Brennkraftmaschine angeordneten Gassensor 10 beispielsweise nach dem Abstellen der Brennkraftmaschine ausgelöst werden. Zu diesem Zeitpunkt ist die Wahrscheinlichkeit am Größten, dass eine erhöhte Temperatur am Gassensor 10 und an den Leitungen 16, 17, 20, 23 auftritt mit der Folge von erhöhten Diffusionsvorgängen und erhöhten Leckströmen. Das Freigabesignal 44 kann auch in anderen geeigneten Betriebszuständen der Brennkraftmaschine wie beispielsweise Leerlauf ausgelöst werden.

Das Stromauswahlsignal 45 veranlasst die Stromquelle 36 zu einer Änderung des Referenzpumpstroms 35, vorzugsweise zur Bereitstellung eines geringeren Referenzpumpstroms 34 als vor Diagnosebeginn. Eine einfache Realisierung wird erreicht, wenn die Stromquelle 36 abgeschaltet wird, der Referenzpumpstrom 35 also zu Null wird. Eine andere Möglichkeit sieht vor, das Vorzeichen des Referenzpumpstrom 35 zu drehen und einen negativen Referenzpumpstrom 35 einzustellen.

Der reduzierte oder der ganz abgeschaltete Referenzpumpstrom 35 kann in Abhängigkeit von den Bedingungen am Referenzgasraum 18 zu einer Abnahme der Konzentration des Referenzgases führen. Der negative Referenzpumpstrom 35 führt in jedem Fall zu einer Abnahme der Referenzgaskonzentration.

Der Komparator 39 wertet den zur ersten Elektrode 11 geleiteten den Pumpstrom aus, der ein Maß für das Sensorsignal 38 des Gassensors 10 ist. Anstelle des Stroms kann der Spannungsabfall am Arbeitswiderstand 37 zur Auswertung herangezogen werden. Hierauf kommt es im Detail nicht an. Wesentlich ist, dass das Sensorsignal 38 des Gassensors 10 zur Diagnose herangezogen ist.

Der Komparator 39 vergleicht das Sensorsignal 38 mit einem vom Schwellenwertgeber 41 bereitgestellten Schwellenwert 40. Der Schwellenwert kann beim Abgas eines Verbrennungsprozesses beispielsweise auf einen Wert festgelegt sein, der einer Sauerstoffkonzentration im zu untersuchenden Abgas von 21%, also dem maximal möglichen Wert entspricht. Überschreitet das Sensorsignal 38 diese Schwelle, liegt mit Sicherheit eine zu geringe Sauerstoffkonzentration im Referenzgasraum 18 vor.

Der Zeitgeber 43 ist vorzugsweise auf die Erfassung einer Maximalzeit festgelegt. Nach Ablauf der Maximalzeit gibt der Zeitgeber 43 in jedem Fall das Endsignal 47 an die Diagnosesteueranordnung 44 ab.

Sofern innerhalb der Maximalzeit keine Schwellenüberschreitung eingetreten ist, kann auf Grund dieses Diagnoseergebnisses die Diagnosesteueranordnung 44 das Stromauswahlsignal 45 entweder unverändert belassen oder derart ändern, dass die Stromquelle 36 einen geringeren Referenzpumpstrom 35 bereitstellt.

Sofern innerhalb der Maximalzeit eine Schwellenüberschreitung vorliegt, tritt das Diagnosesignal 42 auf, das die Diagnosesteueranordnung 44 heranziehen kann zur Festlegung des Stromauswahlsignals 45, das den von der Stromquelle 46 neu bereit zu stellenden Referenzpumpstroms 35 erhöht, um der Vergiftung oder dem erhöhten Leckstrom entgegen zu wirken.. Die vorzunehmende Erhöhung oder Senkung des Pumpstroms 35 kann zwischen Diagnosevorgängen in Stufen erfolgen, bis ein vorgegebener Zustand im Referenzgasraum erreicht ist.

Eine Schwellenüberschreitung durch das Sensorssignal 38 innerhalb der Maximalzeit kann sichergestellt werden durch Vorgabe eines negativen Referenzpumpstroms 35, der zu einer gezielten Abnahme der Sauerstoffkonzentration im Referenzgasraums 18 führt. Der negative Referenzpumpstrom 35 kann gemäß einer Weiterbildung unabhängig von der Stromquelle 36 durch Verbinden der Referenzpumpstromleitung 20 über den ohmschen Widerstand 26 mit einem vorgegebenen Potenzial 25 eingestellt werden. Das Potenzial 25 ist vorzugsweise die elektrische Schaltungsmasse, die auf Grund der Offsetspannungsquelle 31 negativer ist als das auf der Referenzpumpstromleitung 20 vorhandene Potenzial.

Die Diagnoseanordnung 39, 43, 44 ermöglicht die Bewertung der zeitlichen Änderung des Sensorsignals 38 während des Diagnosevorgangs. Insbesondere kann die Änderungsgeschwindigkeit mittels des Zeitgebers 43 quantitativ ermittelt werden. Das Verhalten des Diagnosesignals 42 ermöglicht unmittelbar eine neue Festlegung des Referenzpumpstroms 35 auf einen Wert, der einen stabilen Betrieb des Gassensors 10 sicherstellt.

## Patentansprüche

1. Schaltungsanordnung zum Betreiben eines Gassensors (10), der einen Referenzgasraum (18) enthält, in dem eine Referenzelektrode (19) angeordnet ist wobei die Schaltungsanordnung eine Stromquelle (36) zur Zuführung eines Referenzpumpstroms (35) zur Referenzelektrode (19) enthält, **dadurch gekennzeichnet, dass** eine Diagnoseanordnung (39, 43, 44) vorgesehen ist, die einen Zeitgeber (43) enthält, dass die Diagnoseanordnung (39, 43, 44) derart eingerichtet ist, dass sie ein Stromauswahlsignal (45) an die Stromquelle (36) zur Festlegung des Referenzpumpstroms (35) im Diagnosebetrieb des Gassensors (10) abgibt, dass sie ein Schaltsignal (46) an den Zeitgebern (43) zum Starten des Zeitgebers (43) abgibt, und dass sie ein Sensorsignal (38) des Gassensors (10) im Diagnosebetrieb bezogen auf die Zeit bewertet.

2. Schaltungsanordnung nach Anspruch 1, **dadurch gekennzeichnet, dass** die Diagnoseanordnung (39, 43, 44) derart eingerichtet ist, dass sie die Änderungsgeschwindigkeit des Sensorsignals (38) bewertet.

3. Schaltungsanordnung nach Anspruch 1 oder 2, **dadurch gekennzeichnet, dass** die Diagnoseanordnung (39, 43, 44) einen Komparator (39) enthält, wobei der Komparator (39) derart eingerichtet ist, dass er das Sensorsignal (38) mit einem Schwellenwert (40) vergleicht und in Abhängigkeit vom Vergleichsergebnis ein Diagnosesignal (42) bereitstellt.

4. Schaltungsanordnung nach Anspruch 3, die derart eingerichtet ist, dass das Diagnosesignal (42) den Zeitgeber (43) anhält.

5. Schaltungsanordnung nach Anspruch 4, **dadurch gekennzeichnet, dass** der Zeitgeber (43) derart eingerichtet ist, dass er ein die ablaufende Zeit wiedergebendes Endsignal (47) bereitstellt und dass das Stromauswahlsignal (45) in Abhängigkeit vom Endsignal (47) zum Betreiben des Gassensors (10) außerhalb des Diagnosebetriebs festgelegt ist.

6. Schaltungsanordnung nach Anspruch 5, **dadurch gekennzeichnet, dass** die vom Zeitgeber (43) erfassbare Zeit auf eine Maximalzeit festgelegt ist.

7. Schaltungsanordnung nach einem der vorhergehenden Ansprüche, die derart eingerichtet ist, dass das Stromauswahlsignal (45) die Stromquelle (36) abschaltet oder zur Bereitstellung eines negativen Referenzpumpstroms (35) veranlasst.

8. Schaltungsanordnung nach einem der vorhergehenden Ansprüche, die derart eingerichtet ist, dass die Referenzelektrode (19) über einen Widerstand (26) dauerhaft an ein vorgegebenes Potential geschaltet ist und ein über dem Widerstand (26) fließende Ableitstrom (27) das Referenzgas abpumpt.

9. Schaltungsanordnung nach einem der Ansprüche 4 bis 8, **dadurch gekennzeichnet, dass** der Gassensor (10) ein Lambdasensor ist und der Referenzgasraum (18) Sauerstoff als Referenzgas enthält.

10. Schaltungsanordnung nach Anspruch 9, **dadurch gekennzeichnet, dass** der Lambdasensor in einem Abgassystem einer Brennkraftmaschine angeordnet ist und die Schaltungsanordnung derart eingerichtet ist, dass sie ein Freigabesignal (48) die Diagnose nach dem Abstellen der Brennkraftmaschine startet.

## Claims

1. Circuit arrangement for operating a gas sensor (10) which contains a reference gas chamber (18) in which a reference electrode (19) is arranged, wherein the circuit arrangement contains a power source (36) for feeding a reference pumping current (35) to the reference electrode (19), **characterized in that** a diagnostic arrangement (39, 43, 44) which contains a timer (43) is provided, **in that** the diagnostic arrangement (39, 43, 44) is configured in such a way that it outputs a current selection signal (45) to the power source (36) in order to set the reference pumping current (35) in the diagnostic mode of the gas sensor (10), **in that** said diagnostic arrangement (39, 43, 44) outputs a switching signal (46) to the timers (43) to start the timer (43), and **in that** in the diagnostic mode said diagnostic arrangement (39, 43, 44) evaluates a sensor signal (38) of the gas sensor (10) with respect to the time.

2. Circuit arrangement according to Claim 1, **characterized in that** the diagnostic arrangement (39, 43, 44) is configured in such a way that it evaluates the rate of change of the sensor signal (38).

3. Circuit arrangement according to Claim 1 or 2, **characterized in that** the diagnostic arrangement (39, 43, 44) contains a comparator (39), wherein the comparator (39) is configured in such a way that it compares the sensor signal (38) with a threshold value (40) and makes available a diagnostic signal (42) as a function of the comparison result.

4. Circuit arrangement according to Claim 3, which is configured in such a way that the diagnostic signal (42) stops the timer (43).

5. Circuit arrangement according to Claim 4, **characterized in that** the timer (43) is configured in such a way that it makes available an end signal (47) which reproduces the time which has passed, and **in that** the current selection signal (45) is set as a function of the end signal (47) in order to operate the gas sensor (10) outside the diagnostic mode.

6. Circuit arrangement according to Claim 5, **characterized in that** the time which can be sensed by the timer (43) is set to a maximum time.

7. Circuit arrangement according to one of the preceding claims, which is configured in such a way that the current selection signal (45) switches off the power source (36) or causes a negative reference pumping current (35) to be made available.

8. Circuit arrangement according to one of the preceding claims, which is configured in such a way that the reference electrode (19) is permanently connected to a predefined potential via a resistor (26), and a discharge current (27) which flows across the resistor (26) pumps out the reference gas.

9. Circuit arrangement according to one of Claims 4 to 8, **characterized in that** the gas sensor (10) is a lambda sensor, and the reference gas chamber (18) contains oxygen as the reference gas.

10. Circuit arrangement according to Claim 9, **characterized in that** the lambda sensor is arranged in an exhaust system of an internal combustion engine, and the circuit arrangement is configured in such a way that an enable signal (48) starts the diagnosis after the internal combustion engine has been shut down.

## Revendications

1. Arrangement de circuit pour le fonctionnement d'un détecteur de gaz (10), lequel contient une chambre à gaz de référence (18) dans laquelle est disposée une électrode de référence (19), l'arrangement de circuit contenant une source de courant (36) pour acheminer un courant de pompage de référence (35) à l'électrode de référence (19), **caractérisé en ce qu'**il est prévu un arrangement de diagnostic (39, 43, 44) qui contient un compteur de temps (43), que l'arrangement de diagnostic (39, 43, 44) est configuré de telle sorte qu'il délivre un signal de sélection de courant (45) à la source de courant (36) afin de fixer le courant de pompage de référence (35) en mode diagnostic du détecteur de gaz (10), qu'il délivre un signal de commutation (46) aux compteurs de temps (43) pour démarrer le compteur de temps (43) et qu'il évalue un signal de détection (38) du détecteur de gaz (10) en mode diagnostic en référence au temps.

2. Arrangement de circuit selon la revendication 1, **caractérisé en ce que** l'arrangement de diagnostic (39, 43, 44) est configuré de telle sorte qu'il évalue la vitesse de variation du signal de détection (38).

3. Arrangement de circuit selon la revendication 1 ou 2, **caractérisé en ce que** l'arrangement de diagnostic (39, 43, 44) contient un comparateur (39), le comparateur (39) étant configuré de telle sorte qu'il compare le signal de détection (38) avec une valeur de seuil (40) et délivre un signal de diagnostic (42) en fonction du résultat de la comparaison.

4. Arrangement de circuit selon la revendication 3, **caractérisé en ce que** le signal de diagnostic (42) arrête le compteur de temps (43).

5. Arrangement de circuit selon la revendication 4, **caractérisé en ce que** le compteur de temps (43) est configuré de telle sorte qu'il délivre un signal de fin (47) restituant le temps écoulé et que le signal de sélection de courant (45) est défini en fonction du signal de fin (47) pour faire fonctionner le détecteur de gaz (10) en-dehors du mode diagnostic.

6. Arrangement de circuit selon la revendication 5, **caractérisé en ce que** le temps pouvant être relevé par le compteur de temps (43) est fixé à un temps maximum.

7. Arrangement de circuit selon l'une des revendications précédentes, lequel est configuré de telle sorte que le signal de sélection du courant (45) déconnecte la source de courant (36) ou lui fait délivrer un courant de pompage négatif (35).

8. Arrangement de circuit selon l'une des revendications précédentes, lequel est configuré de telle sorte que l'électrode de référence (19) est commutée en permanence à un potentiel prédéfini par le biais d'une résistance (26) et un courant de dérivation (27) qui circule à travers la résistance (26) évacue le gaz de référence par pompage.

9. Arrangement de circuit selon l'une des revendications 4 à 8, **caractérisé en ce que** le détecteur de gaz (10) est une sonde Lambda et la chambre à gaz de référence (18) contient de l'oxygène comme gaz de référence.

10. Arrangement de circuit selon la revendication 9, **caractérisé en ce que** la sonde Lambda est disposée dans un circuit d'échappement d'un moteur à combustion interne et l'arrangement de circuit est configuré de telle sorte qu'un signal de validation (48) démarre le diagnostic après l'arrêt du moteur à combustion interne.
